(19) Europäisches Patentamt / European Patent Office / Office européen des brevets

(11) **EP 4 750 171 A1**

(12) **EUROPEAN PATENT APPLICATION**
published in accordance with Art. 153(4) EPC

(43) Date of publication:
**27.05.2026  Bulletin 2026/22**

(21) Application number: **23946576.8**

(22) Date of filing: **21.07.2023**

(51) International Patent Classification (IPC):
**H04W 52/04** (2009.01)   **H04W 72/04** (2023.01)
**H04W 88/02** (2009.01)   **H04W 88/08** (2009.01)

(52) Cooperative Patent Classification (CPC):
**H04W 52/04; H04W 72/04; H04W 88/02;
H04W 88/08**

(86) International application number:
**PCT/JP2023/026786**

(87) International publication number:
**WO 2025/022489 (30.01.2025 Gazette 2025/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **NTT DOCOMO, INC.**
**Tokyo 100-6150 (JP)**

(72) Inventors:
• **OKANO, Mayuko**
  **Tokyo 100-6150 (JP)**
• **YOSHIOKA, Shohei**
  **Tokyo 100-6150 (JP)**
• **HARADA, Hiroki**
  **Tokyo 100-6150 (JP)**

• **KUMAGAI, Shinya**
  **Tokyo 100-6150 (JP)**
• **PI, Qiping**
  **Beijing 100190 (CN)**
• **LIU, Wenjia**
  **Beijing 100190 (CN)**
• **WANG, Jing**
  **Beijing 100190 (CN)**
• **HOU, Xiaolin**
  **Beijing 100190 (CN)**
• **CHEN, Lan**
  **Beijing 100190 (CN)**

(74) Representative: **Hoffmann Eitle**
**Patent- und Rechtsanwälte PartmbB
Arabellastraße 30
81925 München (DE)**

(54) **TERMINAL, WIRELESS COMMUNICATION METHOD, AND BASE STATION**

(57)     A terminal according to one aspect of the present disclosure includes a receiving section that receives information related to transmission power for a channel or signal for sensing, and a control section that determines the transmission power, based on the information related to the transmission power. According to one aspect of the present disclosure, it is possible to perform appropriate sensing and communication.

## FIG.1B

UE side monostatic sensing

EP 4 750 171 A1

**Description**

Technical Field

The present disclosure relates to a terminal, a radio communication method, and a base station in next-generation mobile communication systems.

Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

Summary of Invention

Technical Problem

For future radio communication systems (for example, NR), introduction of sensing (for example, Integrated Sensing and Communications (ISAC)) in a terminal (user terminal, User Equipment (UE)) and a base station is under study.

Meanwhile, studies have not been sufficiently made on ISAC operation in the UE/base station. In this case, appropriate sensing/communication fails, and communication throughput may be reduced.

Thus, an object of the present disclosure is to provide a terminal, a radio communication method, and a base station that enable appropriate sensing and communication.

Solution to Problem

A terminal according to one aspect of the present disclosure includes a receiving section that receives information related to transmission power for a channel or signal for sensing, and a control section that determines the transmission power, based on the information related to the transmission power.

Advantageous Effects of Invention

According to one aspect of the present disclosure, it is possible to perform appropriate sensing and communication.

Brief Description of Drawings

[FIG. 1] FIG. 1A and FIG. 1B show examples of a scenario for monostatic sensing in a BS or a UE.
[FIG. 2] FIG. 2A and FIG. 2B show examples of a scenario for bistatic sensing between BSs or between UEs.
[FIG. 3] FIG. 3A and FIG. 3B show examples of a scenario for bistatic sensing between a BS and a UE.
[FIG. 4] FIG. 4 is a diagram to show an example of a schematic structure of a radio communication system according to one embodiment.
[FIG. 5] FIG. 5 is a diagram to show an example of a structure of a base station according to one embodiment.

[FIG. 6] FIG. 6 is a diagram to show an example of a structure of a user terminal according to one embodiment.
[FIG. 7] FIG. 7 is a diagram to show an example of a hardware structure of the base station and the user terminal according to one embodiment.
[FIG. 8] FIG. 8 is a diagram to show an example of a vehicle according to one embodiment.

Description of Embodiments

(Radio Sensing Technology)

Sensing technology using the radio (radio sensing technology, object detection, and the like) is under study. The radio sensing technology is considered to have the following advantages, as compared to other sensing technology.

- While sensing using moving images and infrared is applied only in a specific direction, radio sensing technology eliminates direction restrictions and can utilize characteristics such as diffraction.
- Compared to a moving image capture function, the radio sensing technology can be implemented at a low cost.

According to the radio sensing technology, it is considered that sensing results are collected at a base station (BS), and the collected information is utilized for advanced cyberspace generation and is utilized for feedback to real space.

(Integrated Sensing and Communications (ISAC))

Motivations for ISAC is to achieve high sensing performance and new/enhanced services by using various frequencies and cellular NW equipment and to optimize NW parameters by analyzing real-time sensing data. Use cases and possible requirements for enhancement of 5G systems for providing sensing services to address a plurality of different target industries/applications, and some cases capable of also including non-3GPP type (non-radio communication type) sensors (for example, radar, camera) are under study.
For example, use case 1 is sensing for tourist destination traffic management. For example, use case 2 is intruder detection in a smart home environment.
As ISAC, sensing-assisted communication and communication-assisted sensing are under study. As the sensing-assisted communication, sensing-assisted beam management and sensing-assisted resource allocation are under study. As the communication-assisted sensing, network sensing and coordinated sensing are under study. For implementation of these, a waveform, beam forming, artificial intelligence (AI)/deep learning (DL) operation, radio access technology (RAT), a frame structure, and a reference signal are under study. As a shared spectrum, hardware, and an algorithm for ISAC, a higher frequency band, a larger antenna array, and a similar signal processing algorithm for communication and sensing are also under study.
ISAC has the problems of a unified signal waveform (unified waveform) simultaneously satisfying requirements of communication (for example, OFDM signal) and sensing (for example, chirp signal), ISAC beam forming simultaneously achieving beam forming-based communication (for example, transmit signal, receive signal), sensing (for example, echo signal, transmit signal, reflection signal), and suppression of interference between them, and CSI mining (CSI mining by AI) that mines sensing information by using AI/DL network, based on channel information from communication (for example, UL transmit signal) and radar (for example, DL radar signal).
Based on whether communication and radar (sensing) systems share hardware/band, three types of radar and communication systems are under study. The three types are an independent radar and communication system (independent system), a joint radar and communication system (joint system), and an integrated radar and communication system (integrated system). Hereinafter, assume that a target is an ISAC system in which radar and communication systems share hardware and a band.
Examples of conventional communication systems include communication between one BS (base station) and one UE and joint transmission between a plurality of BSs and one UE. Examples of conventional radar systems include a monostatic radar in which one radar transmits a radar signal and in which the radar receives an echo from a sensing target, and a bistatic radar/multistatic radar in which one radar transmits a radar signal and in which one or more radars receive an echo from a sensing target.
The independent system uses dedicated pieces of hardware and dedicated frequency bands for radar and communication. The dedicated pieces of hardware may be installed at the same location or at dedicated locations.
The joint system uses the same hardware and dedicated frequency bands for radar and communication.
The integrated system uses the same hardware and the same frequency band for radar and communication.
As sensing-related parameters (as sensing parameters), parameters related to a range, a velocity, an angle, localization, recognition, and the like can be defined.

In the ISAC system, sensing can be implemented by three methods below.

{Sensing Method 1} Monostatic sensing using an idea of a monostatic radar
{Sensing Method 2} Bistatic/multistatic sensing using a bistatic/multistatic radar
{Sensing Method 3} UE-assisted sensing (sensing aided by UE) using an idea of NR positioning

Sensing method 1 requires one BS or UE, and performs sensing by using an echo signal. In sensing method 1, there is no BS-to-BS cooperation, UE-to-UE cooperation, or BS-to-UE cooperation. Sensing method 1 requires full duplex, which requires a low SNR of an echo signal. A use case for sensing method 1 is, for example, imaging using terahertz.

Sensing method 2 requires two or more BSs or two or more UEs, and performs sensing by using a reflection signal. For sensing method 2, half duplex is sufficient. Sensing method 2 requires close BS-to-BS or UE-to-UE synchronization and cooperation, and requires scheduling cooperation between a plurality of BSs. A use case for sensing method 2 is, for example, positioning.

Sensing method 3 requires a BS and a UE, and performs sensing by using a communication (UL/DL) signal. In sensing method 3, an existing 5G NR framework operates. Sensing method 3 requires a UE, and sensing of both line-of-sight (LOS) and non-line-of-sight (NLOS) requires high complexity of calculation. A use case for sensing method 3 is, for example, breath monitoring.

In the ISAC system, each of the plurality of sensing methods includes a suitable scenario, a BS/UE capability-related requirement, and sensing accuracy/performance. Sensing method 1 is suitable for a BS/UE with full duplex, and a sensing target close to a BS or a UE. Sensing method 2 is suitable for a BS/UE without full duplex, and a sensing target far from a BS or a UE. Sensing method 3 is suitable for a BS/UE with a high capability.

A scenario suitable for sensing method 1 includes a sensing target close to a sensing BS or UE, a high or medium SNR of an echo signal, and a sensing target without a communication capability. A capability requirement for sensing method 1 includes full duplex (high requirement) in a BS or UE. Sensing performance for sensing method 1 includes high accuracy without quantization, accuracy related to an SNR of an echo signal, and low latency.

A scenario suitable for sensing method 2 includes extremely close synchronization between a plurality of BSs or a plurality of UEs, and a sensing target without a communication capability. A capability requirement for sensing method 2 includes half duplex (low requirement) and synchronization between a plurality of BSs or a plurality of UEs (high requirement). Sensing performance for sensing method 2 includes high accuracy without quantization, accuracy related to a synchronization error, and medium latency.

A scenario suitable for sensing method 3 includes a communication UE around a sensing target. A capability requirement for sensing method 3 is a UE with a large number of calculation resources (high requirement). Sensing performance for sensing method 3 includes medium accuracy with quantization of a feedback value, accuracy related to an allocated resource and a UE location, and high latency.

(Sensing Scenario)

In each of the embodiments described below, the following scenarios and assumptions may be primarily used. The applicable scenario may be sensing based on an echo/reflection signal following at least one of some scenarios below.

- An ISAC scenario requires communication and sensing functions.
- For low complexity and backward compatibility, in a BS and a UE, TDD may be assumed in place of full duplex.

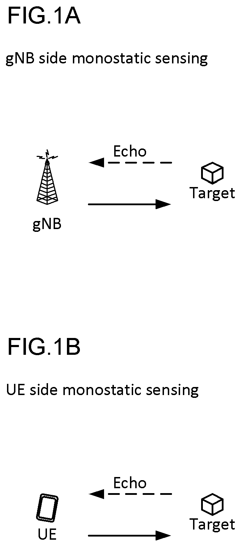

FIG. 1A is an example of monostatic sensing on the gNB side. In the present scenario, channel/signal transmission and echo sensing may be performed on the same gNB side. A sensing channel/signal may be transmitted in a DL time resource, and an echo channel/signal may be received in a UL time resource.

FIG. 1B is an example of monostatic sensing on the UE side. In the present scenario, channel/signal transmission and echo sensing may be performed on the same UE side. A sensing channel/signal may be transmitted in a UL time resource, and an echo channel/signal may be received in a DL time resource.

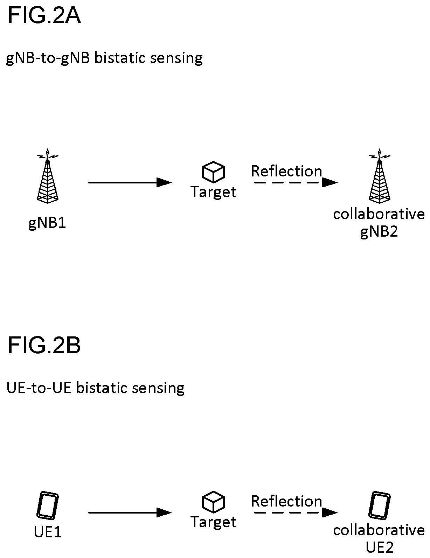

FIG. 2A is an example of bistatic sensing between a plurality of gNBs. In the present scenario, channel/signal transmission may be performed on a certain base station (gNB1) side, and reflection sensing may be performed on another base station (gNB2) side. A sensing channel/signal may be transmitted in a DL time resource, and a reflection channel/signal may be received in a UL time resource.

FIG. 2B is an example of bistatic sensing between a plurality of UEs. In the present scenario, channel/signal transmission may be performed on a certain terminal (UE1) side, and reflection sensing may be performed on another terminal (UE2) side. A sensing channel/signal may be transmitted in a UL time resource, and a reflection channel/signal may be received in a DL time resource.

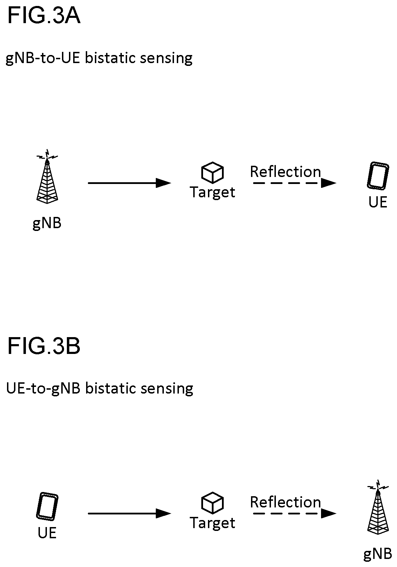

FIG. 3A is an example of gNB-to-UE bistatic sensing. In the present scenario, channel/signal transmission may be performed on the gNB side, and reflection sensing may be performed on the UE side. A sensing channel/signal may be transmitted in a DL time resource, and a reflection channel/signal may be received in a DL time resource. In other words, DL time resources may be used for the sensing.

FIG. 3B is an example of UE-to-gNB bistatic sensing. In the present scenario, channel/signal transmission may be performed on the UE side, and reflection sensing may be performed on the gNB side. A sensing channel/signal may be transmitted in a UL time resource, and a reflection channel/signal may be received in a UL time resource. In other words, UL time resources may be used for the sensing.

In the present disclosure, an echo and reflection may be interchangeably interpreted. Note that, as described above, reflection of a sensing channel/signal in monostatic sensing may mean an echo. In other words, the reflection may mean an echo when an entity that transmits a channel/signal is the same as an entity that receives a reflection channel/signal. On the other hand, the reflection may simply mean reflection when an entity that transmits a channel/signal is different from an entity that receives a reflection channel/signal, that is, in a case of bistatic sensing.

The echo/reflection channel/signal may be an echo/reflection channel/signal for a communication channel/signal or an echo/reflection channel/signal for a radar (sensing) channel/signal.

(Analysis)

With introduction of the above-described ISAC, various definitions for channel/signal sensing are under study. For example, examples of the definitions include the following:

- time-domain and frequency-domain resource patterns;
- design of a sensing sequence;
- information/behavior related to a spatial domain;
- measurement quantity; and

the like.

In addition to the description above, it is necessary to also study information related to power (power information) for channel/signal measurement. Examples of the reason for this include the following, for example.

There can be a case where specific measurement quantity, such as reference signal received power (RSRP) and channel impulse response (CIR), requires information related to power (which may be referred to as power-related information).

Furthermore, in terms of a Tx side (transmission side) for a sensing channel/signal, it is also necessary to study how to determine transmission power for the sensing channel/signal.

In particular, accuracy/range/coverage of sensing is largely dependent on transmission power for a sensing channel/signal. For example, the higher the transmission power is, the more distant (long-distance) target sensing can be performed for.

The power control scheme is assumed to be different from that for UL communication for the following reasons.

Considering reflection/echo of a sensing channel/signal, a path of the sensing channel/signal is assumed to be different from a path of a communication channel/signal.

Considering the application scenario for ISAC, there is a possibility that a detection side is another UE. For example, examples of the possibility include the above-described monostatic sensing on the UE side or bistatic sensing between UEs.

It is also assumed that the above-described range/coverage of sensing is different from the viewpoint of UL communication coverage.

As described above, unless such a power control method related to introduction of ISAC is clear, appropriate sensing and communication cannot be performed, and improvement in communication throughput may be suppressed.

Thus, the inventors of the present invention came up with the idea of configuration related to measurement of a sensing channel/signal, and a power control method for transmission of a sensing channel/signal.

(Various Interpretations and so on)

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, notify, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, other messages (for example, a message from the core network, such as positioning protocol (for example, NR Positioning Protocol A (NRPPa)/LTE Positioning Protocol (LPP)) messages), and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, drop, stop, cancel, puncture, rate match, postpone, not transmit, and the like may be interchangeably interpreted.

In the present disclosure, sensing, ISAC, and non-communication may be interchangeably interpreted.

In the present disclosure, a frequency resource, a time-frequency resource, an RE, an RB, an RBG, an RB set, a subband, a BWP, a carrier, a cell, and a band may be interchangeably interpreted.

In the present disclosure, a time resource, a symbol, a slot, a subslot, a subframe, and a radio frame may be interchangeably interpreted.

Application of each embodiment of the present disclosure may be determined for each band/cell/BWP.

In the present disclosure, a sensing channel/signal, a channel/signal for performing sensing, and a channel/-signal for sensing may be interchangeably interpreted.

In the present disclosure, a channel and a signal may be interchangeably interpreted.

In the present disclosure, an echo and reflection may be interchangeably interpreted.

In the present disclosure, a NW, a gNB, an LMF, and an SF may be interchangeably interpreted.

In the present disclosure, a specific scenario, a scenario, a use case, a sensing mode, monostatic sensing, bistatic sensing, and a topology may be interchangeably interpreted.

In the present disclosure, power-related information, a power-related parameter, power control information, and a power control parameter may be interchangeably interpreted.

(Radio Communication Method)

The embodiment of the present disclosure can be broadly classified as follows.

- First embodiment: Power-related information for measurement of a sensing channel/signal
- Second embodiment: Determination of transmission power for sensing channel/signal on the gNB side (gNB transmission power)
- Third embodiment: Determination of transmission power for sensing channel/signal on the UE side (UE transmission power)

These embodiments and options of each embodiment may each be employed individually, or two or more of the embodiments and the options may be employed in combination.

<First Embodiment>

The first embodiment relates to the respect of a measurement side (reception side), and describes power-related information for measurement of a sensing channel/signal.

In the first embodiment, a specific entity (for example, a BS (gNB)/LMF/SF) may configure/indicate power-related information for measurement of a sensing channel/signal. The power-related information may be configured/indicated for each sensing measurement configuration or for each symbol/slot/subframe/frame.

Note that the first embodiment describes, as an applied scenario, a case of bistatic sensing, but is not limited to this. The first embodiment can be classified into Embodiments 1-1 to 1-4, depending on different cases of bistatic sensing. A UE/BS may determine/judge transmission power for a sensing channel/signal, based on configuration/indication of Embodiments 1-1 to 1-4.

<<Embodiment 1-1>>

Embodiment 1-1 corresponds to a case of bistatic sensing between a plurality of BSs (for example, between gNB1 and gNB2 shown in FIG. 2A).

<Alt 1>

An LMF/SF may support, for a BS (for example, gNB2), configuration/indication of at least one piece of power-related information described below:

- transmission power for a sensing channel/signal;
- transmission power density for the sensing channel/signal;
- the number of resource elements (REs)/resource blocks (RBs) for the sensing channel/signal; and
- a power-related parameter.

In the description above, the transmission power density may be, for example, density corresponding to transmission power per RE/RB. The power-related parameter may be a power offset of the sensing channel/signal for an SSB/CSI-RS or a parameter related to transmission power for an SSB/CSI-RS.

<Alt 2>

A gNB (for example, gNB1) may support exchange, with another gNB (for example, gNB2), of at least one piece of power-related information described below:

- transmission power for a sensing channel/signal;
- transmission power density for the sensing channel/signal;
- the number of resource elements (REs)/resource blocks (RBs) for the sensing channel/signal; and
- a power-related parameter.

In the description above, the transmission power density may be, for example, density corresponding to transmission power per RE/RB. The power-related parameter may be a power offset of the sensing channel/signal for an SSB/CSI-RS or a parameter related to transmission power for an SSB/CSI-RS.
In Alt 2, gNB1 may transmit the above-described power-related information to gNB2 via an Xn interface, for example. Here, the Xn interface may represent an interface used to perform exchange of information (for example, information exchange) between standalone base stations of NR.

<<Embodiment 1-2>>

Embodiment 1-2 corresponds to a case of BS-to-UE bistatic sensing (for example, between a gNB and a UE shown in FIG. 3A).
A gNB/LMF/SF may support, for a UE, configuration/indication of at least one piece of power-related information described below:

- transmission power for a sensing channel/signal;
- transmission power density for the sensing channel/signal;
- the number of resource elements (REs)/resource blocks (RBs) for the sensing channel/signal; and
- a power-related parameter.

In the description above, the transmission power density may be, for example, density corresponding to transmission power per RE/RB. The power-related parameter may be a power offset of the sensing channel/signal for an SSB/CSI-RS or a parameter related to transmission power for an SSB/CSI-RS.

<<Embodiment 1-3>>

Embodiment 1-3 corresponds to a case of UE-to-BS bistatic sensing (for example, between a UE and a gNB shown in FIG. 3B).
An LMF/SF may support, for a gNB, configuration/indication of at least one piece of power-related information described below:

- transmission power for a sensing channel/signal;
- transmission power density for the sensing channel/signal;
- the number of resource elements (REs)/resource blocks (RBs) for the sensing channel/signal; and
- a power-related parameter.

In the description above, the transmission power density may be, for example, density corresponding to transmission power per RE/RB. The power-related parameter may be a parameter, such as Pcmax (maximum transmission power), P0, and $\alpha$ (alpha).

When the LMF/SF configures/indicates the above-described power-related parameter to the gNB, the UE may report some other power-related parameters (Pcmax, Power Headroom Report (PHR), and the like) to the gNB.

<<Embodiment 1-4>>

Embodiment 1-4 corresponds to a case of bistatic sensing between a plurality of UEs (for example, between UE1 and UE2 shown in FIG. 2B).

<Alt 1>

A gNB/LMF/SF may support, for a UE (for example, UE2), configuration/indication of at least one piece of power-related information described below:

- transmission power for a sensing channel/signal; and
- a power-related parameter.

In the description above, the power-related parameter may be a parameter, such as Pcmax, PHR, P0, and $\alpha$ (alpha).

UE1 may report the above-described power-related information to the gNB/LMF/SF. In this case, the gNB/LMF/SF may configure/indicate the power-related information (the reported power-related information) to UE2.

<Alt 2>

A UE (for example, UE1) may support, for another UE (for example, UE2), configuration/indication of at least one piece of power-related information described below:

- transmission power for a sensing channel/signal; and
- a power-related parameter.

In the description above, the power-related parameter may be a parameter, such as Pcmax, PHR, P0, and $\alpha$ (alpha).

As described in Embodiments 1-1 to 1-4, the power-related information may represent the same information for the embodiments, or specific information may be defined (included) for each embodiment.

According to the first embodiment described above, it is possible to clearly configure/indicate power-related information for a sensing channel/signal.

<Second Embodiment>

The second embodiment relates to the respect of a transmission side, and describes determination of transmission power for sensing channel/signal on the gNB side (gNB transmission power).

The second embodiment can be classified into Alt 1 to Alt 3, depending on applied scenarios. A BS may determine/judge transmission power for a sensing channel/signal, based on (according to) Alt 1 to Alt 3.

<Alt 1: Monostatic Sensing on BS Side (see FIG. 1A)>

An LMF/SF may support, for a BS (gNB1 in a gNB1-to-gNB2 bistatic case), indication of at least one piece of power-related information described below:

- transmission power for a sensing channel/signal; and
- transmission power density for the sensing channel/signal.

In the description above, the transmission power density may be, for example, density corresponding to transmission power per RE/RB.

In Alt 1, the indication above may be performed for each sensing measurement configuration.

<Alt 2: Bistatic Sensing Between Plurality of BSs (see FIG. 2A)>

An LMF/SF may support, for a BS (gNB1 in a gNB1-to-gNB2 bistatic case), indication of power-related information described below:

- a power-related parameter for a sensing channel/signal.

In the description above, the power-related parameter may be a power offset of the sensing channel/signal for an SSB/CSI-RS or a parameter related to transmission power for an SSB/CSI-RS.

In Alt 2, the indication above may be performed for each sensing measurement configuration.

<Alt 3: BS-to-UE Bistatic Sensing (see FIG. 3A)>

Determination of transmission power for a sensing channel/signal may depend on BS (gNB) implementation.

A gNB may report, to an LMF/SF, at least one piece of power-related information described below:

- transmission power for the sensing channel/signal; and
- transmission power density for the sensing channel/signal.

In the description above, the transmission power density may be, for example, density corresponding to transmission power per RE/RB.

The gNB may configure/indicate transmission power for the sensing channel/signal to a UE or another gNB (as in the first embodiment).

According to the second embodiment described above, it is possible to appropriately determine transmission power for sensing channel/signal on the gNB side (gNB transmission power).

<Third Embodiment>

The third embodiment relates to the respect of a transmission side, and describes determination of transmission power for sensing channel/signal on the UE side (UE transmission power).

A UE may determine transmission power for a sensing channel/signal, based on (according to) at least one of rules described below.

The third embodiment can be classified into Embodiments 3A to 3B, depending on the presence or absence of path loss estimation for transmission power.

<<Embodiment 3A>>

Embodiment 3A relates to semi-static determination of transmission power without (not accompanied by) path loss estimation.

For the determination of the transmission power, path loss estimation is not necessarily required. For example, there can be a case where movement of the UE may not be considered/assumed (for example, a case where the UE does not move). More specifically, a case is assumed where a UE/NW (gNB/LMF/SF) does not recognize (grasp) a rough location/direction of a certain target, and a sensing RS is swept in all directions. The present embodiment is effective for such a case. Note that the present embodiment may be applied not only to the above case but also to any case.

Embodiment 3A can further be classified into Aspects 3A-1 to 3A-2 below.

{Aspect 3A-1}

Aspect 3A-1 describes a case where a NW (gNB/LMF/SF) directly configures/indicates transmission power or a case where transmission power is directly predefined/calculated, based on a radius of sensing coverage.

Transmission power for a sensing channel/signal may be determined based on configured/indicated/predefined (expected) transmission power. In other words, the UE may determine/judge the transmission power for the sensing channel/signal, based on configured/indicated/predefined (expected) transmission power. Note that the transmission power may be determined for each sensing measurement configuration.

For example, in monostatic sensing on the UE side or bistatic sensing between a plurality of UEs, the transmission power can be directly configured/indicated based on an expected sensing range/sensing coverage. The present aspect is effective for such a case.

The transmission power ($P_{sensing\_channel/RS}$) for the sensing channel/signal may be determined by the following equation.

$$P_{sensing\_channel/RS} = min\{Pcmax, P_{sensing,exp}\} \quad (Equation\ 1)$$

In other words, the transmission power for the sensing channel/signal may be minimum power among maximum transmission power (Pcmax) and expected transmission power ($P_{sensing,exp}$).

The maximum transmission power (maximum output power) Pcmax of the UE for the sensing channel/signal may be configured/indicated separately from Pcmax for a communication channel/signal.

To reduce an impact on the communication channel/signal, Pcmax for the sensing channel/signal may be smaller (or may not be larger) than Pcmax for the communication channel/signal (or a value of P0 as a maximum configuration).

The expected transmission power may be configured/indicated from the NW (gNB/LMF/SF) to the UE. Here, the UE capable of being configured/indicated may be a UE that transmits the sensing channel/signal. Alternatively, the expected transmission power may be predefined/calculated based on a requirement/use case/scenario/deployment for sensing coverage.

The transmission power ($P_{sensing\_channel/RS}$) for the sensing channel/signal may be equal to (may be the same as) the expected transmission power ($P_{sensing,exp}$) for the sensing channel/signal. In other words, $P_{sensing\_channel/RS}$ may equal $P_{sensing,exp}$. The UE may not expect that the expected transmission power is larger than Pcmax.

{Aspect 3A-2}

Embodiment 3A-2 describes a case where transmission power is determined based on a semi-statically configured/indicated power-related parameter.

Transmission power for a sensing channel/signal may be determined based on a semi-statically configured/indicated power-related parameter. In other words, the UE may determine/judge the transmission power for the sensing channel/signal, based on a semi-statically configured/indicated power-related parameter.

In Aspect 3A-1, the UE follows configured/indicated transmission power. In contrast, in aspect 3A-2, the UE may determine/judge the transmission power, based on a configured/indicated/predefined parameter (the above-described power-related parameter).

Specifically, the transmission power ($P_{sensing\_channel/RS}$) for the sensing channel/signal may be determined by the following equation, for example.

$$P_{sensing\_channel/RS} = min\{Pcmax, P_{sensing,exp} + alpha * PL\} \quad (Equation\ 2)$$

Alternatively, the transmission power may be determined by the following equation.

$P_{sensing\_channel/RS} = min\{Pcmax, P_{sensing,exp} + 10log10\ (2^{\mu} * M\_bw) + alpha * PL\}$ (Equation 3) (Equation 3)

Alternatively, the transmission power may be determined by the following equation.

$$P_{sensing\_channel/RS} = min\{Pcmax, P_{sensing,exp} + 10log10(2^{\mu} * M\_bw)\} \quad (Equation\ 4)$$

Alternatively, the transmission power may be determined by the following equation.

$$P_{sensing\_channel/RS} = Pcmax, P_{sensing,exp} + 10log10(2^{\mu} * M\_bw) \quad (Equation\ 5)$$

In the above equation, the maximum transmission power (maximum output power) Pcmax of the UE for the sensing channel/signal may be configured/indicated separately from Pcmax for a communication channel/signal.

To reduce an impact on the communication channel/signal, Pcmax for the sensing channel/signal may be smaller (or may not be larger) than Pcmax for the communication channel/signal (or a value of P0 as a maximum configuration).

In the above equation, the expected transmission power ($P_{sensing,exp}$) may be configured/indicated from the NW (gNB/LMF/SF) to the UE. Alternatively, the expected transmission power may be predefined/calculated based on a requirement/use case/scenario/deployment for sensing coverage.

Alpha in the above equation may be the above-described power-related parameter "α." PL in the above equation may mean a measured value (calculated value) of a propagation loss (path loss (PL)). These alpha and PL may be configured/indicated by the NW, or may be predefined/calculated based on a requirement/use case/scenario/deployment for sensing coverage.

M_bw in the above equation may be the number of RBs/REs for the sensing channel/signal.

Note that when the PL is calculated based on the requirement for sensing coverage, a radar cross section (RCS) may be additionally taken into account for the calculation of the PL.

The RCS may be a parameter representing attenuation caused by reflection from a sensing target. The RCS may be configured/indicated/predefined from the NW via higher layer signaling, for example, or may be predefined/calculated based on a requirement/use case/scenario/deployment for sensing coverage. In other words, it is assumed that the RCS differs depending on a use case/sensing target for a service. In this case, the NW may take account of (assume) a different RCS for each use case/sensing target.

{Variations of Embodiment 3A}

Based on Aspect 3A-1/3A-2, an impact on the previous (last) sensing/measurement quantity (measurement result)/performance may be taken into account.

Particularly in a case of monostatic sensing on the UE side, the UE may be allowed to increase sensing power when the performance of the sensing is unpreferable (unfavorable) or when failing to detect the sensing. This method can refer to the concept of power ramping in RACH procedure, for example.

The present aspect is effective for, for example, monostatic sensing on the UE side, but is not limited to this, and can be applied to other cases. For example, the present aspect is also applicable (effective) to UE-to-gNB bistatic sensing based on an RS measurement result of DL communication.

As a variation of Embodiment 3A, Aspect 3A-3/3A-4 below may be applied.

{Aspect 3A-3}

In Aspect 3A-3, in addition to Aspect 3A-1, impact X on the previous (last) sensing/measurement quantity (measurement result)/performance may be taken into account. Specifically, transmission power of the present aspect may be determined by the following equation.

$$P_{sensing\_channel/RS} = \min\{Pcmax, P_{sensing,exp} + X\} \quad (Equation\ 6)$$

Alternatively, the transmission power may be determined by the following equation.

$$P_{sensing\_channel/RS} = \min\{Pcmax, P_{sensing,exp} + 10\log10(2^\mu * M\_bw) + X\}$$
$$(Equation\ 7)$$

In other words, X may be added to $P_{sensing,exp}$ in (Equation 1) or (Equation 4) described above.

{Aspect 3A-4}

In Aspect 3A-4, in addition to Aspect 3A-2, impact X on the previous (last) sensing/measurement quantity (measurement result)/performance may be taken into account. Specifically, transmission power of the present aspect may be determined by the following equation.

$$P_{sensing\_channel/RS} = \min\{Pcmax, P_{sensing,exp} + alpha * PL + X\} \quad (Equation\ 8)$$

Alternatively, the transmission power may be determined by the following equation.

$P_{sensing\_channel/RS} = \min\{Pcmax, P_{sensing,exp} + 10\log10 (2^\mu * M\_bw) + alpha * PL + X\}$ (Equation 9)     (Equation 9)

In other words, X may be further added to $P_{sensing,exp}$ in (Equation 2) or (Equation 3) described above.

X in Aspect 3A-3/3A-4 may represent an impact on the previous (last) sensing/measurement quantity (measurement result)/performance. The impact (which may be referred to as a parameter related to a level of an impact on transmission power) may represent an impact on the same sensing measurement configuration/same beam.

X may be represented as a positive value (for example, an increase of X dB) or a negative value (a reduction of X dB). This X may be determined based on at least one of factors described below.

- Sensing performance (for example, accuracy, confidence level, or the like)

For example, it may represent sensing performance in the same sensing measurement configuration/previous (last) sensing/measurement result for the same beam. For example, it may be a parameter representing whether sensing accuracy is greater/less than a configured/indicated/predefined threshold.

- Signal strength of an echo/reflection signal

For example, it may represent signal strength of an echo/reflection signal in the same sensing measurement configuration/previous (last) sensing/measurement result for the same beam. For example, it may be a parameter representing whether signal strength is greater/less than a configured/indicated/predefined threshold.

- The number of attempts to detect sensing/the number of failures to detect sensing (for the same sensing measurement configuration/same beam) For example, the transmission power may be increased when a certain number of times is exceeded.
- A UE capability for a power-related parameter, such as Pcmax, PHR, P0, and $\alpha$ (alpha)

The UE may report the value of X described above to the NW.

According to Embodiment 3A, the UE can appropriately determine transmission power for a sensing channel/-signal without taking account of a path loss.

<<Embodiment 3B>>

Embodiment 3B relates to determination of transmission power with (taking account of) path loss estimation, and describes transmission power control (TPC) for each sensing channel/signal.

For the determination of the transmission power, there can be a case where TPC for each sensing channel/signal is required. For example, a case where movement of the UE is taken into account/assumed is considered. More specifically, examples of the case include a case where a UE/NW (gNB/LMF/SF) recognizes (grasps) a rough location/direction of a certain target. The present embodiment is effective for such a case. Note that the present embodiment may be applied not only to the above case but also to any case.

The determination of the transmission power requires first that how to calculate (acquire) a value of path loss estimation is clarified. When the path loss estimation is taken into account, it is assumed that the power control scheme is different from that for a UL communication channel/signal.

Depending on a certain scenario (topology), two-direction (bidirectional) propagation is present in a path loss (PL).

For example, in a case of UE-to-gNB bistatic sensing, propagation from the UE to a target and propagation from the target to the gNB are considered.

In a case of bistatic sensing between a plurality of UEs, propagation from UE1 to a target and propagation from the target to UE2 are considered.

In a case of monostatic sensing on the UE side, propagation from the UE to a target and propagation from the target to the UE are considered.

In Embodiment 3B, the value of the path loss estimation may be determined, depending on an applied scenario, according to the following method. Specifically, Embodiment 3B can be classified into Alt 1 to Alt 2 for a transmission side (Tx side) and a reception side (Rx side).

<Alt 1: Path Loss Estimation on Transmission Side (e.g. UE) for Sensing>

The value of the path loss estimation may be estimated/determined by a UE on the transmission side (UE1 in a case of bistatic sensing between a plurality of UEs), based on a reference path loss RS. Here, the reference path loss RS may be configured/indicated by the NW for each sensing measurement configuration or for each beam/direction/spatial filter-related parameter in one sensing measurement configuration.

The above-described reference path loss RS for path loss estimation may be determined based on at least one of the following.

(Alt 1-1)

- An existing communication channel (for example, an SSB/CSI-RS/PRS)

(Alt 1-2)

- An existing communication measurement resource (for example, an SRS-RSRP measurement resource)

(Alt 1-3)

- A new RS/resource for path loss measurement (estimation) for sensing

A scenario/topology to which Alt 1-1 is applicable may be, for example, UE-to-gNB bistatic sensing. A scenario/topology to which Alt 1-2 is applicable may be, for example, bistatic sensing between a plurality of UEs. A scenario/topology to which Alt 1-3 is applicable may be, for example, monostatic sensing on the UE side. Note that scenarios/topologies applicable to Alt 1-1 to Alt 1-3 are not limited to these, and may be other scenarios/topologies.

<Alt 2: Path Loss Estimation on Reception Side (e.g. gNB) for Sensing>

The value of the path loss estimation may be estimated/determined by an entity on a reception side for the first sensing (entity that receives the sensing first). The entity to be a target may be, for example, a gNB in a case of UE-to-gNB bistatic sensing, UE2 in a case of bistatic sensing between a plurality of UEs, or a UE in a case of monostatic sensing on the UE side.

Here, the entity that receives the sensing (entity that performs the path loss estimation) may signal (transmit/report), after estimating a path loss, information related to the estimated path loss (for example, a value of the path loss estimation) to an entity on a transmission side for the sensing.

In Alt 1/Alt 2 described above, an entity on a reception side for the sensing may report information related to an estimated path loss to a NW (gNB/LMF/SF), for example. Subsequently, the entity (NW) that receives the report may transmit (forward) the information (information related to an estimated path loss) to an entity (for example, UE) on a transmission side for the sensing.

Embodiment 3B can be further classified into Aspects 3B-1 to 3B-2 below, depending on types of channel/signal to be a reference for transmission power control (TPC).

{Aspect 3B-1}

Aspect 3B-1 describes a case where TPC for a sensing channel/signal is based on a rule for a specific UL channel/signal (for example, an SRS/PUCCH/PUSCH).

The TPC for the sensing channel/signal may be controlled based on a semi-static parameter/path loss estimation/dynamic power adjustment. For example, an existing rule for the SRS/PUCCH/PUSCH may be employed.

More specifically, transmission power for the channel/signal may be controlled based on a parameter including Pcmax, the bandwidth of the channel/signal, a DL path loss, P0, $\alpha$ (alpha), or a power adjustment state. Among them, P0/$\alpha$/power adjustment state may be determined based on a power control parameter configured/indicated by a gNB.

The transmission power of the present aspect may be determined by the following equation, for example.

$$P_{sensing\_channel/RS} = \min\{Pcmax, P0 + 10\log10 (2^{\mu} * M\_bw) + alpha * PL + \text{(Equation 10)} \qquad \text{(Equation 10)}$$

In the above equation, the maximum transmission power (maximum output power) Pcmax of the UE for the sensing channel/signal may be configured/indicated separately from Pcmax for a communication channel/signal.

To reduce an impact on the communication channel/signal, Pcmax for the sensing channel/signal may be smaller (or may not be larger) than Pcmax for the communication channel/signal (or a value of P0 as a maximum configuration).

M_bw in the above equation may correspond to the bandwidth of the sensing channel/signal. For example, M_bw may be the number of RBs/REs for the sensing channel/signal in a corresponding BWP/serving cell.

For the determination/calculation of the PL in the above equation, a reference path loss RS for the path loss estimation determined based on Alt 1/Alt 2 described above may be used.

f_power_adjustment in the above equation may be determined in a manner similar to that of the SRS/PUSCH/PUCCH, based on a power control loop/state or a TPC command. In this case, the NW may support configuration/indication of the power control loop/state or the TPC command for the sensing channel/signal.

In the present aspect, the power control loop/state for the sensing channel/signal may be supported separately from an existing communication channel/signal.

For example, when the UE transmits a sensing channel/signal, power control loop index 0/1 may mean (correspond to) a power control loop (for example, a first/second power control loop) dedicated to the sensing channel/signal.

When the UE transmits a communication channel/signal, a power control loop index may mean (correspond to) a power control loop (for example, a first/second power control loop) dedicated to the communication channel/signal.

Alpha in the above equation may be the power-related parameter "$\alpha$," similarly to Embodiment 3A.

In the above equation, P0/alpha for the sensing channel/signal may be configured/indicated by the NW.

In the present aspect, it is assumed that a sensing range/coverage for a target is different from that for a UL communication channel/signal. Thus, configuration of a power control parameter (including Pcmax/P0/alpha) for the sensing channel/signal may be supported separately from an existing communication channel/signal.

It is also assumed that a range of values of alpha for the sensing channel/signal is different from that for an existing channel/signal. For example, a maximum value of alpha may be greater than 1, and a candidate value greater than an existing candidate value may be supported.

Propagation of the sensing channel/signal includes two-direction (bidirectional) propagation, as described above. For example, when path loss estimation is performed by an entity on a transmission side, and propagation of a reference path loss RS used for the path loss estimation is not the same as the propagation of the sensing channel/signal, a gap between them (difference between the propagations) can be adjusted by using alpha described above.

The range of values of P0/alpha may be different for each sensing mode (scenario/topology) (for example, UE-to-gNB bistatic sensing/bistatic sensing between a plurality of UEs/monostatic sensing on the UE side).

A candidate value (range) for Pcmax/P0/alpha/PL in the above equation may be indicated separately for each UE capability (for example, UE power class), UE type (for example, IoT device), or frequency range/SCS.

At least one of Pcmax/P0/alpha/PL may be shared between transmission of a sensing channel/signal and transmission of a UL communication channel/signal (for example, a PRACH/PUCCH/PUSCH/SRS).

{Aspect 3B-2}

Aspect 3B-2 describes a case where TPC for a sensing channel/signal is based on a rule for a specific UL channel/signal (for example, a PRACH).

The TPC for the sensing channel/signal may be controlled based on a semi-static parameter/path loss estimation/dynamic power adjustment. For example, an existing rule for the PRACH may be employed.

More specifically, transmission power for the channel/signal may be controlled based on a parameter including Pcmax, PRACH target power, or a DL path loss. Among them, the PRACH target power may be associated with a power ramping counter maintained for configured preamble target power/initial access procedure.

The transmission power of the present aspect may be determined by the following equation, for example.

$$P_{sensing\_channel/RS} = \min\{Pcmax, P_{sensing,target} + PL\} \quad (Equation\ 11)$$

In the above equation, the maximum transmission power (maximum output power) Pcmax of the UE for the sensing channel/signal may be configured/indicated separately from Pcmax for a communication channel/signal.

To reduce an impact on the communication channel/signal, Pcmax for the sensing channel/signal may be smaller (or may not be larger) than Pcmax for the communication channel/signal (or a value of P0 as a maximum configuration).

In the above equation, $P_{sensing,target}$ may represent target received power for the sensing channel/signal, and may be configured/indicated by the NW.

For the determination/calculation of the PL in the above equation, a reference path loss RS for the path loss estimation determined based on Alt 1/Alt 2 described above may be used.

Taking account of the bandwidth of the sensing channel/signal, the following equation may be employed.

$$P_{sensing\_channel/RS} = \min\{Pcmax, P_{sensing,target} + 10\log10(2^{\mu} * M\_bw) + PL\}$$
(Equation 12)

Here, M_bw in the above equation may correspond to the bandwidth of the sensing channel/signal. For example, M_bw may be the number of RBs/REs for the sensing channel/signal in a corresponding BWP/serving cell.

A candidate value (range) for Pcmax/PL in the above equation may be indicated separately for each UE capability (for example, UE power class), UE type (for example, IoT device), or frequency range/SCS.

At least one of Pcmax/PL may be shared between transmission of a sensing channel/signal and transmission of a UL communication channel/signal (for example, a PRACH/PUCCH/PUSCH/SRS).

{Variations of Embodiment 3B}

Based on Aspect 3B-1/3B-2, an impact on the previous (last) sensing/measurement quantity (measurement result)/performance may be taken into account.

Particularly in a case of monostatic sensing on the UE side, the UE may be allowed to increase sensing power when the performance of the sensing is unpreferable (unfavorable) or when failing to detect the sensing. This method can refer to the concept of power ramping in RACH procedure, for example.

The present aspect is effective for, for example, monostatic sensing on the UE side, but is not limited to this, and can be applied to other cases. For example, the present aspect is also applicable (effective) to bistatic sensing between a UE and a gNB based on an RS measurement result of DL communication.

As a variation of Embodiment 3B, Aspect 3B-3/3B-4 below may be applied.

{Aspect 3B-3}

In Aspect 3B-3, in addition to Aspect 3B-1, impact X on the previous (last) sensing/measurement quantity (measurement result)/performance may be taken into account. Specifically, transmission power of the present aspect may be determined by the following equation.

$$P_{sensing\_channel/RS} = \min\{Pcmax, P0 + 10\log10(2^{\mu} * M\_bw) + alpha * PL + f\_power\_adjustment + X\} \quad \text{(Equation 13)}$$
(Equation 13)

In other words, X may be further added to P0 in (Equation 10) described above.

{Aspect 3B-4}

In Aspect 3B-4, in addition to Aspect 3B-1, impact X on the previous (last) sensing/measurement quantity (measurement result)/performance may be taken into account. Specifically, transmission power of the present aspect may be determined by the following equation.

$$P_{sensing\_channel/RS} = \min\{Pcmax, P_{sensing,target} + PL + X\} \quad \text{(Equation 14)}$$

In other words, X may be further added to $P_{sensing, target}$ in (Equation 11) described above.

X in Aspect 3B-3/3B-4 may represent an impact on the previous (last) sensing/measurement quantity (measurement result)/performance. The impact (which may be referred to as a parameter related to a level of an impact on transmission power) may represent an impact on the same sensing measurement configuration/same beam.

X may be represented as a positive value (for example, an increase of X dB) or a negative value (a reduction of X dB). This X may be determined based on at least one of factors described below.

- Sensing performance (for example, accuracy, confidence level, or the like)

For example, it may represent sensing performance in the same sensing measurement configuration/previous (last) sensing/measurement result for the same beam. For example, it may be a parameter representing whether sensing accuracy is greater/less than a configured/indicated/predefined threshold.

- Signal strength of an echo/reflection signal

For example, it may represent signal strength of an echo/reflection signal in the same sensing measurement configuration/previous (last) sensing/measurement result for the same beam. For example, it may be a parameter representing whether signal strength is greater/less than a configured/indicated/predefined threshold.

- The number of attempts to detect sensing/the number of failures to detect sensing (for the same sensing measurement configuration/same beam) For example, the transmission power may be increased when a certain number of times is exceeded.
- A UE capability for a power-related parameter, such as Pcmax, PHR, P0, and $\alpha$ (alpha)

The UE may report the value of X described above to the NW.

According to Embodiment 3B, the UE can appropriately determine transmission power for a sensing channel/signal by taking account of a path loss.

<<Variations of Third Embodiment>>

The transmission power for the sensing channel/signal described above may be determined based on transmission power for the last sensing channel/signal or a communication channel/signal. For example, the transmission power may be increased or reduced based on the last transmission power.

For example, transmission power for transmission of the first/initial sensing channel/signal may be determined based on Embodiment 3A/3B described above. Subsequently, transmission power for a next/subsequent sensing channel/signal may be determined by using a specific rule, based on transmission power for the last sensing channel/signal or a communication channel/signal.

Such transmission power for sensing channel/signal transmission other than the first/initial transmission may be determined based on at least one of Aspects 3C-1 to 3C-2 below.

{Aspect 3C-1}

The transmission power may be determined based on the last transmission power and an increase or reduction of power (for example, an increase or reduction of X dB) indicated by the NW.

For example, in Y symbols/slots after indication related to power adjustment, for a sensing channel/signal in a start/end symbol/slot earlier (not later) than the first symbol/slot, the transmission power may be kept to be equal to that for the last transmission of the sensing channel/signal (in a case of the same measurement configuration).

In Y symbols/slots after indication related to power adjustment, for the first sensing channel/signal in a start/end symbol/slot earlier (not later) than the first symbol/slot, the transmission power may be determined by the following equation.

$$P_{sensing\_channel/RS} = min\{Pcmax,\ P\_last + X\}\ (Equation\ 15)$$

Here, P_last may be transmission power in the last transmission of a sensing channel/signal or a communication channel/signal. Note that the last transmission may be transmission using the same sensing measurement configuration or the same transmit beam of a sensing channel/signal.

X in the above equation may be referred to as a power adjustment offset, as described below.

In the above equation, the maximum transmission power (maximum output power) Pcmax of the UE for the sensing channel/signal may be configured/indicated separately from Pcmax for a communication channel/signal.

To reduce an impact on the communication channel/signal, Pcmax for the sensing channel/signal may be smaller (or may not be larger) than Pcmax for the communication channel/signal (or a value of P0 as a maximum configuration).

{Aspect 3C-2}

The transmission power may be determined based on the previous (last) transmission power and the previous (last) sensing/measurement quantity (measurement result)/performance.

For example, the UE may determine a power adjustment offset for a sensing channel/signal (boosting/reduction of X dB), based on the previous (last) sensing/measurement quantity (measurement result)/performance.

When the UE determines the power adjustment offset for the sensing channel/signal, transmission power for transmission of a subsequent sensing channel/signal may be determined similarly to Equation 15 described above.

Here, P_last may be transmission power in the last transmission of a sensing channel/signal or a communication channel/signal. Note that the last transmission may be transmission using the same sensing measurement configuration or the same transmit beam of a sensing channel/signal.

X in the above equation may be referred to as a power adjustment offset.

In the above equation, the maximum transmission power (maximum output power) Pcmax of the UE for the sensing channel/signal may be configured/indicated separately from Pcmax for a communication channel/signal.

To reduce an impact on the communication channel/signal, Pcmax for the sensing channel/signal may be smaller (or may not be larger) than Pcmax for the communication channel/signal (or a value of P0 as a maximum configuration).

According to the third embodiment described above, it is possible to appropriately determine transmission power for sensing channel/signal on the UE side (UE transmission power).

<Notes>

In the present disclosure, a parameter related to power control (power-related parameter) can be configured in common for cells or in a UE-specific manner. The power-related parameter may be configured/indicated by an SIB/RRC/MAC CE/DCI.

In the present disclosure, transmission power may be configured/determined independently for each spatial filter/beam ID/transmission sensing RS ID/path.

In the present disclosure, impact X on the previous (last) sensing/measurement quantity (measurement result)/performance and power adjustment offset X may be interchangeably interpreted.

<Supplements>

{Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

{Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

{Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.

At least one of the above-described embodiments may be applied only to a UE that has reported a specific UE capability or that supports the specific UE capability.

The specific UE capability may indicate at least one of the following:

- supporting of specific processing/operation/control/information for at least one of the embodiments above
- supporting of ISAC operation
- supporting of awareness of ISAC operation
- supporting of configuration/indication of power-related information (including, for example, a power-related parameter) for configuration of measurement of a sensing channel/signal
- supporting of configuration/indication of a power-related parameter for transmission of a sensing channel/signal
- supporting of application of transmission power for a sensing channel/signal directly configured/indicated by a NW (gNB/LMF/SF)
- supporting of determination of transmission power for a sensing channel/signal, the determination being based on a power-related parameter semi-statically configured/indicated/predefined by a NW (gNB/LMF/SF)
- supporting of determination of transmission power for a sensing channel/signal or dynamic power adjustment based on a semi-static power-related parameter and path loss estimation
- supporting of power adjustment for transmission power for a sensing channel/signal

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. For example, the specific information may be information indicating enabling of ISAC, any RRC parameter for a specific release (for example, Rel. 18/19), or the like.

When the UE does not support at least one of the specific UE capabilities above or is not configured with the specific information, operation of Rel. 15/16 may be applied, for example.

(Supplementary Note)

Regarding one embodiment (first/second embodiment) of the present disclosure, the following supplementary notes of the invention will be given.

{Supplementary Note 1}

A terminal including:

a receiving section that receives information related to transmission power for a channel or signal for sensing; and a control section that determines the transmission power, based on the information related to the transmission power.

{Supplementary Note 2}

The terminal according to supplementary note 1, wherein the information includes at least one of transmission power, transmission power density, a number of resource elements, a number of resource blocks, and a power-related parameter for the channel or signal for the sensing.

{Supplementary Note 3}

The terminal according to supplementary note 1 or 2, wherein the receiving section receives the information for each sensing measurement configuration.

{Supplementary Note 4}

The terminal according to any one of supplementary notes 1 to 3, wherein the power-related parameter is a parameter related to a power offset or transmission power for a channel or signal for sensing for a certain reference signal.

(Supplementary Note)

Regarding one embodiment (first/third embodiment) of the present disclosure, the following supplementary notes of the invention will be given.

{Supplementary Note 1}

A terminal including:

a receiving section that receives information related to transmission power for a channel or signal for sensing; and
a control section that determines the transmission power, based on the information related to the transmission power, wherein
the control section controls the transmission power, depending on presence or absence of path loss estimation for a channel or signal for sensing.

{Supplementary Note 2}

The terminal according to supplementary note 1, wherein the information includes at least one of transmission power, transmission power density, a number of resource elements, a number of resource blocks, and a power-related parameter for the channel or signal for the sensing.

{Supplementary Note 3}

The terminal according to supplementary note 1 or 2, wherein the control section determines the transmission power, based on expected transmission power.

{Supplementary Note 4}

The terminal according to any one of supplementary notes 1 to 3, wherein the control section determines the transmission power, based on a path loss estimated based on a reference path loss reference signal.

(Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

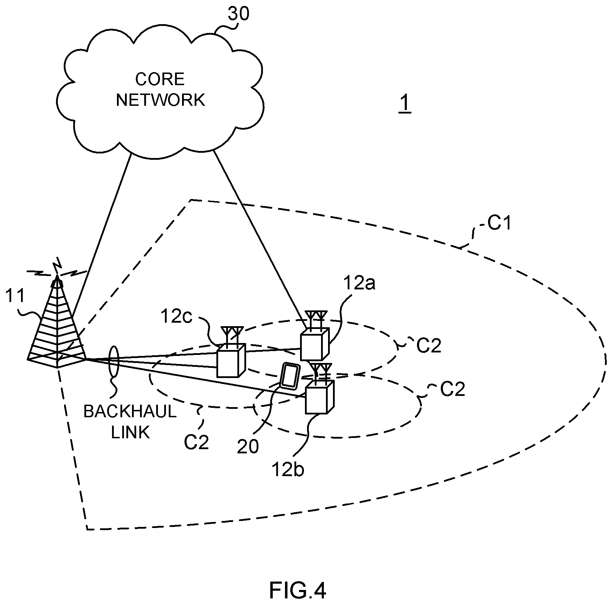

FIG. 4 is a diagram to show an example of a schematic structure of the radio communication system according to one embodiment. The radio communication system 1 (which may be simply referred to as system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and the like.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), a Sensing Function (SF), and operation, administration, and maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

(Base Station)

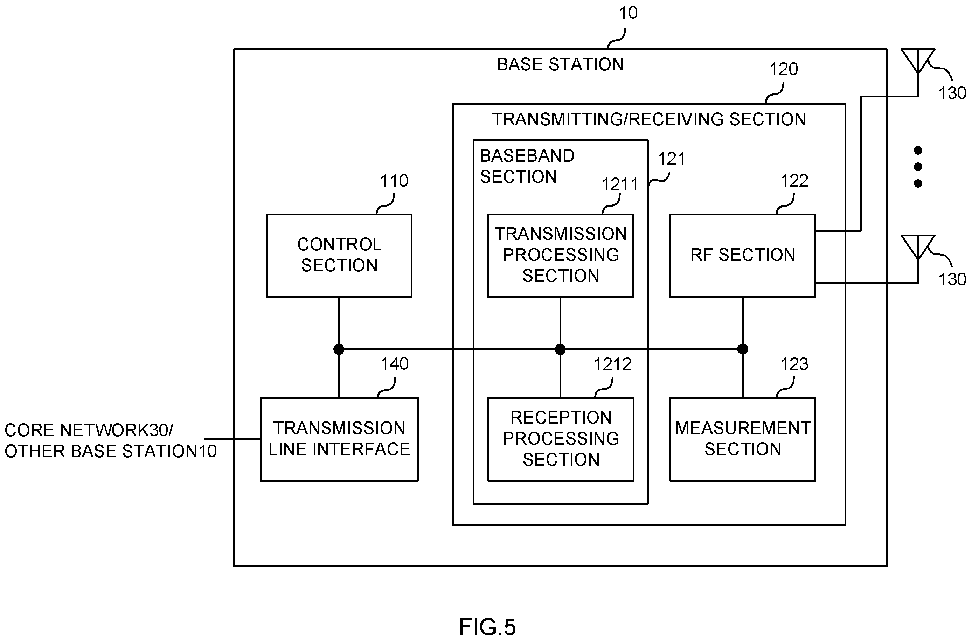

FIG. 5 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam or a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit information related to transmission power for a channel or signal for sensing.

The control section 110 may determine the transmission power, based on the information related to the transmission power. The control section 110 may control the transmission power, depending on presence or absence of path loss estimation for a channel or signal for sensing.

(User Terminal)

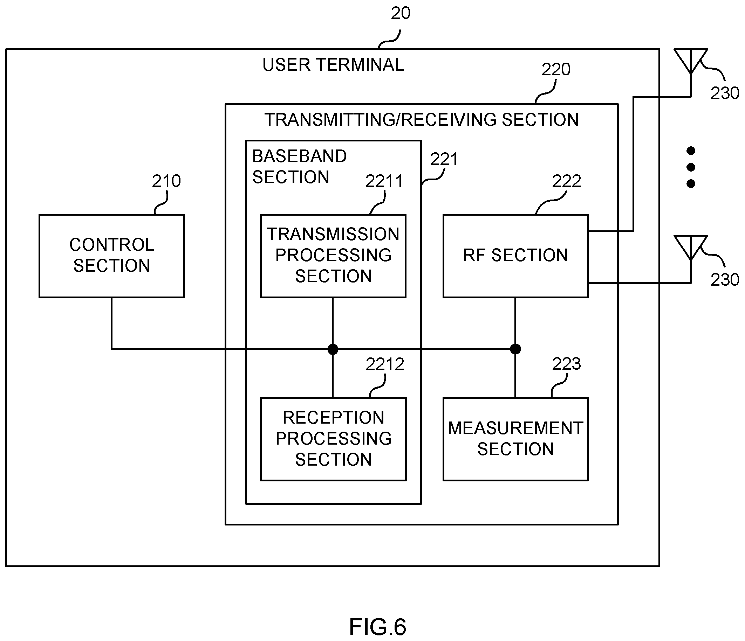

FIG. 6 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam or a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI calculation, based on a resource for channel measurement. The resource for channel measurement may be, for example, a non zero power (NZP) CSI-RS resource. The measurement section 223 may derive interference measurement for CSI calculation, based on a resource for interference measurement.

The resource for interference measurement may be at least one of an NZP CSI-RS resource for interference measurement, a CSI-interference measurement (IM) resource, and the like. Note that CSI-IM may be referred to as CSI-interference management (IM), and may be interchangeably interpreted as zero power (ZP) CSI-RS. Note that, in the present disclosure, the CSI-RS, the NZP CSI-RS, the ZP CSI-RS, the CSI-IM, a CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

The transmitting/receiving section 220 may receive information related to transmission power for a channel or signal for sensing. The transmitting/receiving section 220 may receive the information for each sensing measurement configuration. The information may include at least one of transmission power, transmission power density, a number of resource elements, a number of resource blocks, and a power-related parameter for the channel or signal for the sensing. The power-related parameter may be a parameter related to a power offset or transmission power for a channel or signal for sensing for a certain reference signal.

The control section 210 may judge a sensing resource and a communication resource time-division multiplexed with each other. The transmission power may be determined based on the information related to the transmission power. The control section 210 may control the transmission power, depending on presence or absence of path loss estimation for a channel or signal for sensing. The control section 210 may determine the transmission power, based on expected transmission power. The control section 210 may determine the transmission power, based on a path loss estimated based on a reference path loss reference signal.

(Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

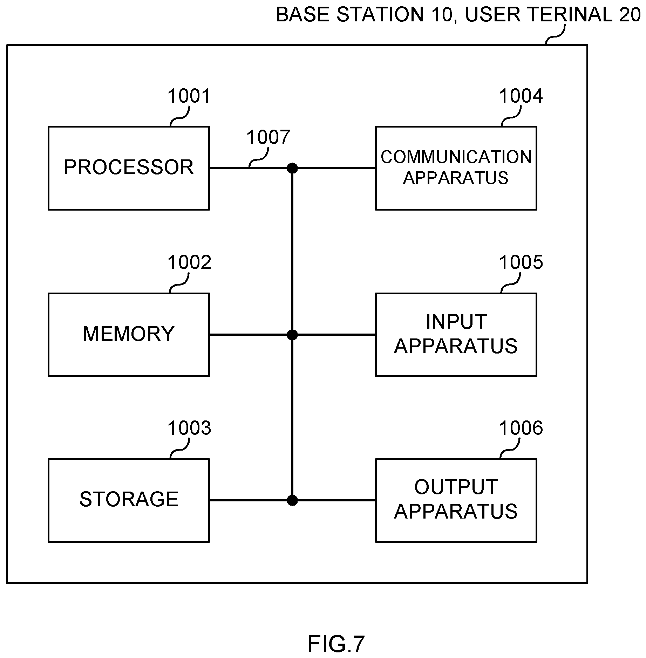

For example, a base station, a user terminal, and so on according to one embodiment of the present disclosure may function as a computer that executes the processes of the radio communication method of the present disclosure. FIG. 7 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

(Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station" a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit" "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

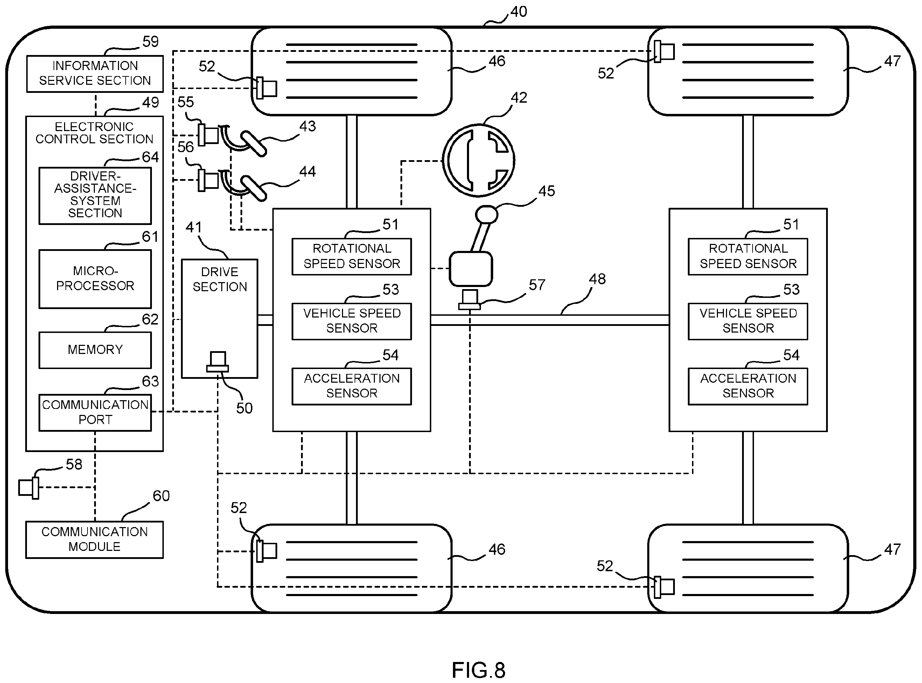

FIG. 8 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

**Claims**

1. A terminal comprising:

   a receiving section that receives information related to transmission power for a channel or signal for sensing; and
   a control section that determines the transmission power, based on the information related to the transmission power.

2. The terminal according to claim 1, wherein
   the information includes at least one of transmission power, transmission power density, a number of resource elements, a number of resource blocks, and a power-related parameter for the channel or signal for the sensing.

3. The terminal according to claim 1, wherein
   the receiving section receives the information for each sensing measurement configuration.

4. The terminal according to claim 1, wherein
   the power-related parameter is a parameter related to a power offset or transmission power for a channel or signal for sensing for a certain reference signal.

5. A radio communication method for a terminal, the radio communication method comprising:

   receiving information related to transmission power for a channel or signal for sensing; and
   determining the transmission power, based on the information related to the transmission power.

6. A base station comprising:

   a transmitting section that transmits information related to transmission power for a channel or signal for sensing; and
   a control section that determines the transmission power, based on the information related to the transmission power.

# FIG.1A

gNB side monostatic sensing

Echo

Target

gNB

# FIG.1B

UE side monostatic sensing

Echo

Target

UE

FIG.2A

gNB-to-gNB bistatic sensing

FIG.2B

UE-to-UE bistatic sensing

# FIG.3A

gNB-to-UE bistatic sensing

# FIG.3B

UE-to-gNB bistatic sensing

FIG.4

FIG.5

EP 4 750 171 A1

USER TERMINAL 20

TRANSMITTING/RECEIVING SECTION 220

BASEBAND SECTION 221

CONTROL SECTION 210

TRANSMISSION PROCESSING SECTION 2211

RF SECTION 222

RECEPTION PROCESSING SECTION 2212

MEASUREMENT SECTION 223

230

FIG.6

EP 4 750 171 A1

BASE STATION 10, USER TERINAL 20

1001
PROCESSOR

1007

1004
COMMUNICATION APPARATUS

1002
MEMORY

1005
INPUT APPARATUS

1003
STORAGE

1006
OUTPUT APPARATUS

FIG.7

FIG.8

## INTERNATIONAL SEARCH REPORT

| International application No. |
|---|
| **PCT/JP2023/026786** |

**A. CLASSIFICATION OF SUBJECT MATTER**

*H04W 52/04*(2009.01)i; *H04W 72/04*(2023.01)i; *H04W 88/02*(2009.01)i; *H04W 88/08*(2009.01)i
FI: H04W52/04; H04W72/04; H04W88/02 150; H04W88/08

According to International Patent Classification (IPC) or to both national classification and IPC

**B. FIELDS SEARCHED**

Minimum documentation searched (classification system followed by classification symbols)

H04W52/04; H04W72/04; H04W88/02; H04W88/08

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2022/133951 A1 (HUAWEI TECH CO., LTD.) 30 June 2022 (2022-06-30) paragraphs [312]-[314] | 1-6 |
| A | Huawei, HiSilicon, "Overview of Release 19 proposals", 3GPP TSG-RAN Adhoc 2023_06_Rel-19_workshop RWS-230319, [online], 31 May 2023, slides 1, 9, [retrieved on 29 January 2024], retrieved from <https://www.3gpp.org/ftp/tsg_ran/TSG_RAN/TSGR_AHs/2023_06_RAN_Rel19_WS/Docs/RWS-230319.zip> Integrated Sensing and Communications in Rel-19 (RWS-230186), slide 9 | 1-6 |

☐ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **29 January 2024** | **06 February 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**
Information on patent family members

International application No.

**PCT/JP2023/026786**

| Patent document cited in search report | | | Publication date (day/month/year) | Patent family member(s) | | | Publication date (day/month/year) |
|---|---|---|---|---|---|---|---|
| WO | 2022/133951 | A1 | 30 June 2022 | US | 2023/0309144 | A1 | |
| | | | | EP | 4248696 | A1 | |
| | | | | CN | 116548002 | A | |

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0*, April 2010